Europäisches Patentamt

European Patent Office

Office européen des brevets

(11) Publication number: **0 408 941 A2**

# EUROPEAN PATENT APPLICATION

(21) Application number: 90112316.6

(22) Date of filing: 28.06.90

(51) Int. Cl.⁵: **B60C 11/14**, B60C 11/03

(30) Priority: 21.07.89 IT 2125789

(43) Date of publication of application:
23.01.91 Bulletin 91/04

(84) Designated Contracting States:
AT BE CH DE DK ES FR GB LI LU NL SE

(71) Applicant: PIRELLI COORDINAMENTO
PNEUMATICI Società per Azioni
Piazzale Cadorna, 5
I-20123 Milan(IT)

(72) Inventor: Mezzanotte, Mario
Via Argellati, 28
Milan(IT)

(74) Representative: Giannesi, Pier Giovanni et al
Pirelli S.p.A. Direzione Brevetti Piazzale
Cadorna, 5
I-20123 Milano(IT)

(54) Tyre with high adherence.

(57) The invention concerns a tyre for vehicles wheels and specifically a tyre of the so-called "all season" type, capable of assuring the best performance in any running, weather and road condition.

The tyre of this invention presents a tread band (1) axially divided into two circumferential portions of different width, distinguished for the type of compound and tread pattern, wherein one of the two portions, that (11) of greater width, constituted by a compound and presenting a pattern especially suitable for wintry uses, embeds anti-skid granules (2) of high resistance, ceramic or metal-ceramic materials, whose volume quantity is comprised between 8% and 15% with respect to the volume of the corresponding compound portion.

EP 0 408 941 A2

## TYRE WITH HIGH ADHERENCE

The present invention concerns tyres for vehicles wheels and specifically the car tyres able to offer a high road holding in any use condition.

The road holding is an essential characteristic of the tyre for the car driving safe; it shall be guaranteed even by varying the use conditions and without damaging the other performance characteristics required to the tyre too, particularly the kilometrical out-put, wear uniformity, directional stability and comfort.

Moreover the road holding depends simultaneously on different factors such as the vehicle speed, running condition (along a rectilinear trajectory, on cornering, on drift, by braking or in acceleration), environmental situation (snow-covered, icy or clean road) and road surface condition (dry or wet).

A high road holding value depends not only on the tyre structure but also on the characteristics of the pattern imprinted on the tread band and on the viscous-elastic characteristics of the tread compound. Unfortunately, the variety of the possible use situations requires contrasting exigencies, generally incompatible in a single tyre, so that the most commonly adopted solution is to provide the market with specialized tyres for a prevalent use condition, such as the so-called block "winter" tyres for specifically wintry uses, able to develop a high adherence on snow-covered roads, or ribbed tyres for summery uses, for high speeds on road surfaces in very good conditions.

Nevertheless for some time tchnicians have engaged themselves even with the realization of tyres which could satisfy these contrasting demands, particularly offering a high road holding both£ in wintry and summery conditions. Tyres usually known as "all season" have been proposed, essentially identified by a tread band axially divided into two portions circumferentially placed side by side, of different elastomeric composition, one particularly suitable for wet roads and wintry climates, the other one for dry roads and for summery temperatures, each provided with a kind of pattern suitable for specific use.

A tyre of this type, which turned out to be very satisfactory under any aspect has already been described in the previous Italian patent No. 1.087.461 of the same applicant.

Of course, as any compromise, this represents too on one side a better solution than that of a specific tyre used in anomalous conditions (a "winter" tyre utilized during summery travels), but at the same time it does not achieve the same results as a specialised tyre used in its specific use ambit.

The applicant has now discovered that it is possible to raise sensitively the qualitative level of these tyres, particularly by improving the road grip and the road holding on snow-covered and/or icy roads, without compromising the tyre behaviour in the summery use, as instead usually happens.

The aim of the present invention is therefore to supply an "all season" tyre provided with a tread divided into two circumferential zones distinguished by pattern and/or elastomeric composition, axially placed side by side, whose performance has been sensitively improved with respect to the known tyres of the same type.

Therefore the object of the present invention is a tyre for vehicles wheels comprising in the carcass crown a tread band destined to the contact with the ground, said tread band being provided with a relief pattern to assure tyre qualities, especially of adherence to the road surface in any running condition, said tread band presenting two circumferential portions distinguished by elastomeric composition and/or pattern, axially placed side by side, respectively first and second portion, of different width, said first portion being that of greater width, characterized by the fact that said first tread band portion includes anti-skid granules, in a volume quantity comprised between 8% and 15% with respect to the volume of the elastomeric composition of said first portion. Very conveniently said two circumferential tyre portions are distinguished by the elastomeric composition, said first portion consisting of an elastomeric composition specifically suitable for being used in wintry conditions.

In alternative or in addition to the above said embodiment, said tread band includes an asymmetric pattern with respect to the tyre middle plane, the pattern obtained on said first tyre portion presenting a plurality of blocks separated from each other by a net of oblique circumferential and transversal grooves.

In any case the width of said first tyre portion is comprised between 55% and 65% of the width of the entire tread band.

Then, as regards the above said anti-skid granules, these are preferably chosen among ceramic, metal-ceramic materials and metallic oxides, and have à prismatic shape, whose minimum size is not smaller than 0.5 mm and maximum size not greater than 4.5 mm.

In the preferred embodiment of the invention said anti-skid granules are corundum granules of substantially cylindric shape.

A second object of the present invention is an appropriate method of manufacturing the previously described tyres, said method comprising the steps of producing two different semi finished pieces, longitudinally continuous, respectively for said first and second portion, of assembling each other said two semi finished pieces in longitudinal direction in order to realize a single longitudinally continuous band of established straight section, of cutting said band into sections of convenient length, of assembling the sections on said torically shaped carcass and of subjecting the green tyre so obtained to a vulcanizing and moulding treatment, and being characterized by the fact of including similarly the steps of embedding in said first portion of tread band, during the preparation step of the corresponding semifinished piece, anti-skid granules whose volume quantity is comprised between 8% and 15% with respect to the elastomeric composition volume of said first portion and of giving, at least to said semifinished piece, the corresponding established straight section by means of a profiling operation.

However, the present invention will be now better understood by the following description and the accompanying figures, given by way of non limiting example, of which:

FIGURE 1 - is a straight section of the tyre according to the invention;

FIGURE 2 - is a portion of the plant view of one specific tread pattern for the tyre in figure 1.

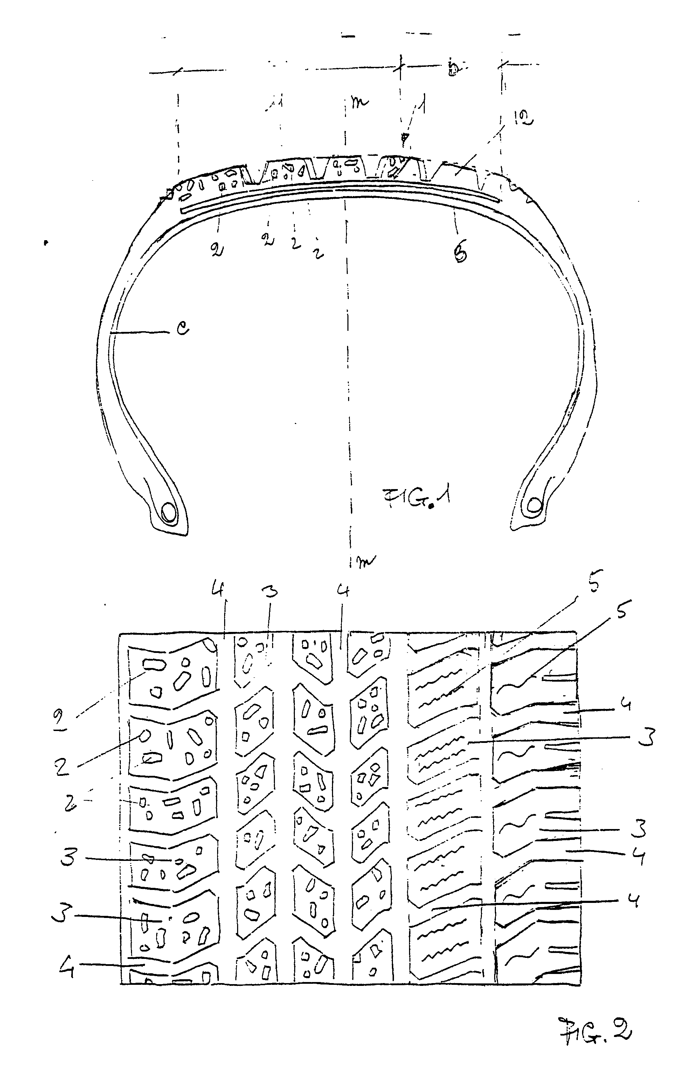

Figure 1 shows therefore the straight section of the tyre according to the present invention.

The general structure of a tyre is too well known to be described in detail here: it will be enough observing that any tyre presents in the carcass crown Ca thick band (1) of elastomeric material, whose characteristics are adequate for the contact with the ground, usually known as tread band. A relief pattern is realized within the thickness of such band, said relief pattern is constituted by full and void spaces, so as to form a plurality of blocks 3 separated from each other by a net of grooves 4, with circumferential and transversal path, eventually provided even with lamellae 5; the main purpose of said pattern is to assure the adherence of the tyre to the road surface in any running condition, particularly avoiding the aquaplaning phenomenon, and developing the road grip to incoherent grounds.

According to a technology, which is well-known in the field of "all season" tyres, also in the tyre of the present invention the tread band 1 is constituted by two circumferential portions 11 and 12, axially placed side by side, of different elastomeric composition while the pattern imprinted on such band is an asymmetric pattern with respect to said middle plane.

With this solution each elastomeric composition and tread pattern portion explicates its best qualities in a well specific climatic condition, cooperating as well, even if less soundly, with the flanked portion in opposite climatic conditions.

For example, in the illustrated case, the portion 11 is explicitly foreseen for use on snow-covered and/or icy roads, with wintry temperatures, the portion 12 for opposite climatic conditions, on dry or wet but clean roads.

Of course, the two characteristics constituted by the differentiated compound and pattern can exist even singularly; in other words the invention can also be applied to tyres constituted by a single compound and differentiated pattern tread, as well as to tyres with symmetrical pattern and tread of elastomeric materials differentiated in axial sense.

As regards the chemical composition (recipe) of the elastomeric material constituting said portions, the technology offers all necessary information to enable the technicians of the art to determine the most suitable solution: in any case such aspect is treated in details in the previously mentioned Italian patent No. 1.087.461.

Finally, it is not obligatory that the elastomeric composition of a certain tread portion and the corresponding pattern have the same axial extension, so that a specific pattern portion can extend partially even on the elastomeric composition of the axially flanked portion.

According to the present invention the elastomeric composition of portion 11 contains anti-skid granules 2, whose volume quantity is comprised between 8% and 15% with respect to the volume of the elastomeric material of said portion 11: specifically, in the prototype tyre illustrated in the present description, said quantity is of about 12%.

Said anti-skid granules are conveniently made up of very hard materials, preferably but not exclusively of ceramic, or metal-ceramic type, such as carbides or nitrides or silicium oxides, tungsten, titanium, zirconium, boron, chromium, etc. The applicant has conveniently used corundum in the form of polyhedral granules, substantially prismatic ones, in particular cylindric, with diameter of the order of 2 mm and height of the order of 4 mm: in any case said prisms shall be neither smaller than 0.5 mm nor bigger than 4.5mm. Conveniently, the granules before being embedded within the elastomeric material these are made sticky by means of treatments with suitable adhesives: for example it turns out to be very suitable to this purpose the pretreatment of the granules with "CHEMOSIL " type adhesives spreaded in two overlapped layers, having dried the inner layer before applying the outer one. With this treatment the granule joins so steadily to the elastomeric material that the loss of the granule in exercise does not happen by detaching from said material but in consequence of the tearing of the elastomeric material surrounding the granule.

The granules can be embedded in the compound in any suitable way, however it is highly preferable to adopt the specific method according to the invention here described. In fact, for their high hardness the granules are very abrasive elements, so that the use of conventional methods damage in short time and irreparably the elastomer working machines, such as for example extruders, utilized for producing and shaping the tread bands.

In a way known per se, the method according to the invention includes the usual steps of producing two different semifinished pieces, longitudinally continuous, one for each of the two different portions of tread compound, of assembling said two semifinished pieces along a sidewall, in longitudinal direction, in order to realize a single longitudinally continuous band, which, either for a previous shaping of the said two pieces or for a direct shaping of the complex constituted by the two semifinished pieces assembled together, achieves a straight section exactly established in relation to the geometry of the corresponding finished tyre; then, said band is cut into sections of convenient length (the future tread band), and these sections are assembled to the already torically shaped carcass, therefore the green tyre so prepared is subject to the usual moulding and vulcanizing treatment to obtain the finished product.

However, the method is characterized by the fact that the embedding of the anti-skid granules within said first tread band portion is carried out during the compound homogenizing step and precisely during the preparation of the corresponding semifinished piece. More precisely the compound necessary for producing said semifinished piece is homogenized in a machine known as "mixer", substantially constituted by two heated cylinders rotating in opposite direction: the compound, many times resucked and compressed between the two cylinders, undergoes a stretching treatment with heat development, which causes plasticization and homogenization of the entire elastomeric mass.

According to the method of the invention the anti-skid granules are embedded within the compound during this step of the working process, making sure that the distance between the two cylinders, even if minimum, is greater than the maximum geometric size of said granules, in order to avoid the contact between a granule and the surface of the two cylinders simultaneously and the consequent degrading of the cylinders and/or the break of the granule.

Still according to the invention, the semi finished piece constituting the first tread band portion is shaped, indifferently before or after the assemblage to the other semi finished piece (in which case conveniently the entire band will be shaped) by means of a profiling operation, making it pass between couples of rollers suitably shaped, in substitution of the usual extruding operation.

It is evident, that the profile roller will not be damaged by the possible contact with anti-skid granules, as it happens by contrast for the extruder die, because in case of contact the roller, pressed against the band, will make the granule penetrate in the compound thickness. Therefore the granules embedded with this process place themselves in the band thickness in a very casual way, and particularly with a casual orientation too, which remains as such even after the tyre moulding and vulcanization. For effect of this orientation casualty, and remembering that the granules have a prismatic shape, it is understood therefore that granules will be placed perpendicularly to the tread surface, granules placed parallely to it and other ones in intermediate position.

Clearly, the granules placed parallely to the tread surface will be concentrated in proximity of said surface. It is evident that the granules perpendicularly placed are the most strongly anchored to the tread band, while such stability decreases by varying the orientation until it becomes very weak for the granules placed parallely to the tyre surface. These latter detach in fact very easily from the tread when, owing to the compound wear, they come into contact with the road surface.

In practice, in the tyre of the invention, owing to the particular distribution of said granules, the granules' loss is concentrated in the initial period of tyre use (first 1000/2000 km) and it corresponds about to 7% - 8% of the total embedded granules, after which it abruptly falls to minimum values and maintains constant in the time, assuring tyre efficiency almost until its complete wear.

During the tyre vulcanizing step, because of high temperature and pressure values to which the green carcass is subject, a thin film of elastomeric material created by the compound flowing along the mould surface covers the granules arising from the tread: so, in order to make the tyre immediately operative on its mounting on the vehicle it is convenient to buf the new tyre tread surface to bring back to light the surface of the outermost granules.

The quantity of granules introduced into the elastomeric material turns out to be very critical: in fact for volume values lower than 8% with respect to the embedding material volume the efficacy of said granules decreases in a substantial way, viceversa for values higher than 15% the elastomeric material quantity placed between two adjacent granules decreases sensitively and with it the elasticity of the compound/granules composition, with the result that the granules in exercise detach from the tread easily. In this way not only the quantity of residual granules decreases to values lower than that 8%, which represents the efficacy minimum threshold of the granules, but the tread remains pitted by small hollows (by detaching the granule drags with itself part of the elastomeric material) that, apart from the aesthetical aspect, give rise to an early and irregular wear in the tread, favouring furthermore the detaching of other bigger tread pieces with rapid progressive increase of the damage.

It is very important in relation to the invention that the anti-skid granules are limited to the tread portion with so-called "wintry" characteristics, as before specified.

For a better understanding of this fact it is worth remembering that the axial width bl of the above said portion occupies more than 50% of the total width L of the tread, which generally coincides even with the width of the well-known belt structures 6 interposed between the tyre carcass and the tread band. The tread pattern is instead a little larger because it extends preferably even in the zone of the tyre shoulders, that is in a zone which just sometimes comes into contact with the ground when the tyre is running highly stressed on cornering or on drift.

In particular in the tyre of the invention said width bl is comprised between 55% and 65% of the width L.

Consequently the tread width b2 of the summery zone is consequently smaller than the wintry one.

Furthermore the tyres of this type shall be mounted on the vehicle in order to present the wintry side in an inner position, that is turned towards the vehicle, and the summery side turned outwards. Considering now the tyre in exercise, when it is on cornering or on drift the tread band portion disposed on the outer side, that is the summery portion, results highly stressed by tangential forces with a very high specific value and in any case higher than the one which, under the same imposed total stresses, acts on the wintry tread portion, just because of the different width of the interested surface.

Even for this reason the summery tread portion is realized by a compound of high hardness able to offer a high resistance to abrasion.

Therefore it is clear the reason for which the summery zone, that is the axially outer one of said tyres, must not contain anti-skid granules.

In fact, if said zone were provided with said granules, these latter under the effect of the said tangential stresses would be torn from the tread in a notable measure with all the negative consequences already illustrated.

Passing now to consider the tyre behaviour of the invention in exercise it is noted that when it is utilized in winter on snow-covered and/or icy roads, the low temperature makes the tread elastomeric material stiff and in particular the compound of said first portion: the granules, steadily anchored in it protrude lightly from the tread surface and develop a high road grip in acceleration and by braking, on cornering and on drift, preventing substantially the tyre from slipping on the road and assuring, in this way, the road holding and the directional stability even at high speed, not differently from what it is possible to obtain with best spirted tyres. Viceversa, in favourable climatic conditions, the material of said first portion remains softer, even for the effect of the heat produced by the rolling on the road, so that said granules, thanks to the elastomeric material elasticity, are pushed toward the inside of the tread band and do not exercise any other perceptible gripping action on the road surface. Substantially, the tyre of the invention behaves as a common tyre with one compound tread and therefore all the drawbacks produced by the spiked tyres are avoided, for the fact that spike heads, always protruding from the tread surface, touch directly the road surface decreasing the area of contact tyre/road and the tyre road holding qualities too, causing moreover a considerable wear of the road surface; therefore, in most countries, their use is subject to severe seasonal and environmental limitations.

It is now evident that the present description has just an illustrative and not limitative purpose, so that it includes all those modifications and variants, which are here not explicitly described, however easily deducible from the present idea by the skilled in the art.

## Claims

1. Tyre for vehicles wheels comprising in the carcass crown a tread band (1) destined to the contact with the ground, said tread band being provided with a relief pattern to assure the tyre qualities, especially of adherence to the road surface in any running condition, said tread band presenting two circumferential portions (11,12) distinguished by elastomeric composition and/or pattern, axially placed side by side, respectively first and second portion, of different width, said first portion (11) being that of greater width, characterized by the fact that said first portion (11) of tread band includes anti-skid granules (2) whose volume quantity is comprised between 8% and 15% with respect to the volume of the elastomeric composition of said first portion.

2. Tyre according to claim 1 characterized by the fact that said two circumferential portions are distinguished from each other by the elastomeric composition, said first portion (11) comprising an elastomeric composition specifically suitable for use in wintry conditions.

3. Tyre according to claim 1 characterized by the fact that said tread band includes an asymmetric pattern with respect to the tyre middle plane, the pattern part obtained on said first portion (11) presenting a plurality of blocks (3) separated from each other by a net of oblique circumferential and transversal grooves (4).

4. Tyre according to claim 1 characterized by the fact that said first portion (11) width is comprised between 55% and 65% of the entire tread band width.

5. Tyre according to claim 1 characterized by the fact that said anti-skid granules (2) are chosen from the group comprising ceramic and metal-ceramic materials, and metallic oxides.

6. Tyre according to claim 1 characterized by the fact that said anti-skid granules (2) have a prismatic shape, whose minimum size is not smaller than 0.5 mm and the maximum size not bigger than 4.5 mm.

7. Tyre according to claim 6 characterized by the fact that among said prismatic granules, those disposed parally to the tread surface are concentrated in the radially outermost portion of said tread band.

8. Tyre according to claim 1 characterized by the fact that said anti-skid granules (2) are corundum granules of substantially cylindrical shape.

9. Method for manufacturing tyres for vehicles wheels comprising a tread band (11) in the carcass crown destined to the contact with the ground, said tread band being provided with a relief pattern to assure the tyre qualities especially of adherence to the road surface in any running condition, said tread band presenting two circumferential portions (11,12) distinguished by elastomeric composition and/or pattern, axially placed side by side, respectively first and second portion, of different width, said first portion (11) being that of greater width, said method comprising the steps of producing two distinguished semifinished pieces, longitudinally continuous, respectively for said first (11) and second (12) portion, of assembling said two semifinished pieces in longitudinal direction in order to realize a single longitudinally continuous band and of established straight section, of cutting said band into sections of convenient length, of assembling said sections on said torically shaped carcass and of subjecting the green tyre so obtained to a vulcanizing and moulding treatment, characterized by the fact of including steps of embedding in said first portion (11) of tread band, during the preparation step of the corresponding semi finished piece, anti-skid granules (2) whose volume quantity is comprised between 8% and 15% with respect to the volume of said first portion elastomeric composition and of assigning, at least to said semifinished piece, the corresponding established straight section by means of a profiling operation.

FIG. 1

FIG. 2